# EUROPEAN PATENT SPECIFICATION

(11) **EP 1 641 296 B1**
(45) Date of publication and mention of the grant of the patent: **27.10.2010**
(21) Application number: 05255890.5
(22) Date of filing: 22.09.2005
(51) Int. Cl.: H04W 16/14, H04W 28/18

(54) **A frequency band allocation device and method**
Vorrichtung and Verfahren für Zuweisung eines Frequenzbandes
Dispositif et procédé pour l'allocation d'une bande de fréquences

(30) Priority: 22.09.2004 JP 2004275584
(43) Date of publication of application: 29.03.2006
(73) Proprietor: NTT DoCoMo, Inc., Chiyoda-ku Tokyo 100-6150 (JP)
(72) Inventor: Matoba, Naoto, c/o NTT DoCoMo, Inc., Tokyo 100-6150 (JP); Yoshino, Hitoshi, c/o NTT DoCoMo, Inc., Tokyo 100-6150 (JP); Sugiyama, Takatoshi, c/o NTT DoCoMo, Inc., Tokyo 100-6150 (JP)
(74) Representative: Maury, Richard Philip

(56) References cited:
- WO-A-02/073366
- US-A- 5 710 766
- US-A1- 2004 082 335

## Description

### BACKGROUND OF THE INVENTION

The present invention generally relates to a frequency band allocation device and a frequency band allocation method employed in mobile communications systems in which plural frequency bands are utilized for plural communications systems.

Nowadays, the technology area for radio communication systems is developing from conventional telecommunications to a variety of schemes such as Bluetooth and radio LAN. For example, a short distance connection such as a several centimeter distance connection was done by a cable in the past, but recently radio connection technology for such short distances has been under development.

In general, radio communications systems at present, in the same area and same time, employ a single worldwide standard system, such as GSM (Global System for Mobile Communications) or IMT-2000 (International Mobile Telecommunication 2000). However, in the future, required communication systems will be diversified depending on their purposes per area and operators. In this situation, plural different systems each of which has a different purpose should be co-mingled in the same time and the same area. For that purpose, mobile stations and base stations should be compatible with these different systems.

Conventionally, a single radio device can be connected to a dedicated single network. Currently, by having several different kinds of software, a single hardware radio device can be adaptively connected to different networks. Reconfigurable radio devices are also being developed.

On the other hand, application oriented communications are required. It is tedious for users to select a radio communication route per application, and therefore a radio device is required to automatically select the optimum radio communication route for each application.

A radio communication device executing different characteristic applications is known, which can select one of plural radio communications systems for each application, based on the application's characteristics, and can determine a frequency band to be used in the selected radio communications system. Such a device is disclosed in Japanese Patent Laid-open Application No. 2004-179693.

However, most part of spectrum has already been allocated to various radio communication systems, and therefore it is difficult to obtain new spectrum for new radio communications systems.

When new and existing systems have to co-exist during a transition period in the same operator's service, it is required to establish a co-exist control system and method for smoothly transferring from the old system to the new system. In a case where different generation systems co-exist, for example, while a mobile communications system is transferred from the second generation system to the third generation system in the same frequency bands, one frequency band is shared by plural systems. In this case, it is required to establish a control system and method for allowing plural systems to co-exist. It is also required to establish a control system and method for allowing different operators such as public telecommunication operators, broadcasting operators, etc., to co-exist.

Radio communication operators can utilize only licensed frequency bands which are licensed to them. They cannot utilize other frequency bands which are licensed to other operators even if the bands are not utilized. Therefore, the operators have to deal with traffic variation within the range of licensed frequency bands.

In the future, radio governmental policy regarding frequency band allocation may be changed from the license system in which operators exclusively utilize their licensed frequency bands to the registration system in which any registered operators satisfying certain standards can share and utilize certain frequency bands.

Frequency bands allocated by the registration system may be utilized by other operators, and therefore it is required to establish an efficient signal transmission system which can avoid interference from and to other systems.

It is also difficult to obtain a continuous broad bandwidth.

When a high speed transmission is required, a broad bandwidth is needed, but broad bandwidth is no longer available in spectrum which is suitable for radio communication.

Since only fragmented frequency bands are available, it is required to establish a multi-band signal transmission technology and an optimum traffic allocation method in order to utilize the fragmented frequency bands. For example, a method for separately allocating frequency bands per each use and a method for controlling resources are required to be established.

W0 02/073366A discloses dynamic spectrum allocation with the features of the pre-characterising portion of Claim 1.

The invention provides a device and a method as defined in Claims 1 and 7.

The present invention can be employed in mobile communications systems in which plural frequency bands are utilized for plural communications system.

According to an embodiment of the present invention, it is possible to efficiently allocate usable frequency bands to radio communications systems.

### BRIEF DESCRIPTION OF THE DRAWINGS

Fig. 1 is a graph for explaining frequency utilization technology relating to an embodiment of the present invention;
FIG. 2 is a block diagram of a communication system according to the embodiment of the present invention;
Fig. 3 is a block diagram of a frequency/transmission power allocation device according to the embodiment of the present invention;
FIG. 4 schematically shows plural systems coexisting in one area;
FIG. 5 is a flowchart illustrating an operational procedure of the communication system according to the embodiment of the present invention; and
Fig. 6 is an explanatory view for illustrating frequency selection according to the embodiment of the present invention.

### DESCRIPTION OF THE PREFERRED EMBODIMENTS

The following is a description of embodiments of the present invention, with reference to the accompanying drawings.

Throughout all the figures, members and parts having the same or similar functions are assigned the same or similar reference numerals or symbols, and redundant explanations are omitted.

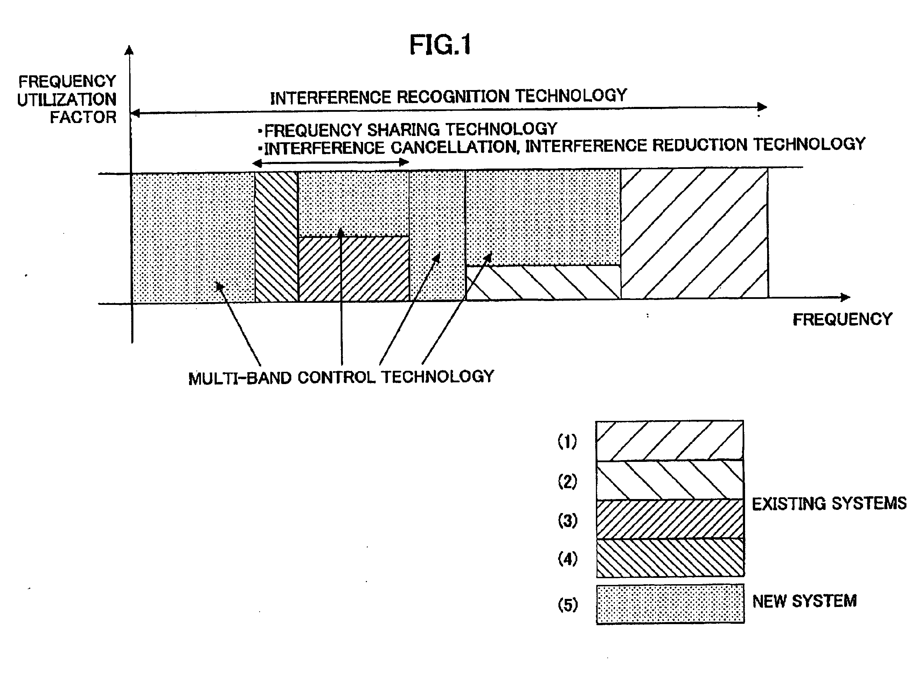

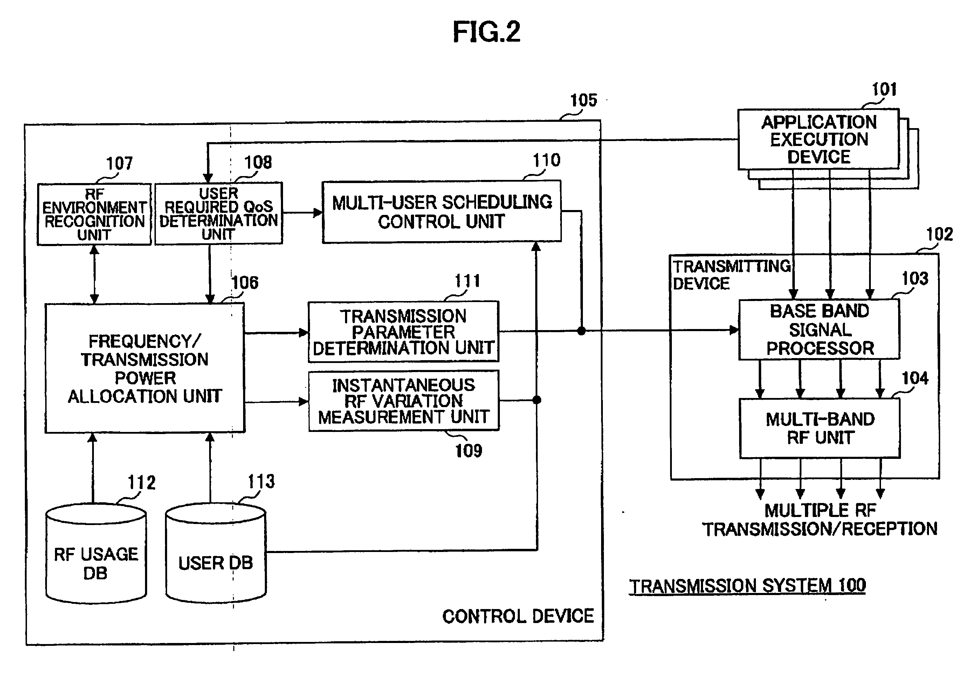

A frequency band allocation device according to embodiments of the present invention is explained below with reference to Figs. 1 and 2.

First, frequency usage technology is explained with reference to Fig. 1.

In a graph shown in Fig. 1, the horizontal axis shows frequency and the vertical axis shows frequency utilization factor or frequency efficiency.

In this case, frequency bands indicated by (1) ~ (4) have been already allocated to existing systems. When a new system is started, all the remaining frequency band capacity is allocated to the new system to maximize the frequency utilization factor.

The frequency band allocation is done by the following schemes. The same frequency band is allocated to and shared by the existing systems and the new system; plural frequency bands are used in one system; and one frequency band is shared by plural new systems.

Under the situation where frequency bands utilized by one communication service operator and frequency bands utilized by another communication service operator co-exist co-mingled, the frequency band allocation device according to the embodiments of the present invention adaptively controls and utilizes all the remaining open frequency bands to maximize the frequency utilization factor by employing interference recognition technology, frequency sharing technology, interference cancellation technology, interference canceling technology and multi-band control technology.

Next, a transmission system 100 according to this embodiment is explained with reference to Fig. 2.

The communication system 100 is placed in, for example, a mobile station or a base station or both. The communication system 100 comprises an application execution device 101, a transmitting device 102 coupled to the application execution device 101, and a control device 105 coupled to the transmitting device 102.

The transmitting device 102 comprises a base band signal processor 103 coupled to the application execution device 101 and a multi-band RF unit 104 coupled to the base band signal processor 103.

The control device 105 comprises a frequency/transmission power allocation unit 106, an RF environment recognition unit 107 coupled to the frequency/transmission power allocation unit 106, a user required QoS determination unit 108, a transmission parameter determination unit 111, an instantaneous RF variation measurement unit 109, an RF usage DB 112, a user DB 113, and a multi-user scheduling control unit 110 coupled to the base band signal processor 103. The transmission parameter determination unit 111 is connected to the base band signal processor 103, and the user required QoS determination unit 108 is connected to the application execution device 101.

The frequency/transmission power allocation unit 106, the RF usage DB 112 and the user DB 113 constitute the frequency band allocation device.

When two mobile stations start communications with each other, or a mobile station starts communications with a server, the application execution device 101 of the communication system 100 sends a communication request to the other mobile station or the server.

The application execution device 101 includes a variety of applications and executes these applications to perform voice, video and data communication, etc.

Upon receiving data transmitted through a network from the mobile station or the server to communicate with, the base station inputs the data to the base band signal processor 103.

The mobile station executes a predetermined application among applications stored in the transmission system, and inputs digitized transmission data to the base band signal processor 103.

The base band signal processor 103 in each of the base station and the mobile station selects a transmitting frequency and time per user (multi-scheduling). Depending on the selected frequency and time, adequate error correction, interleaving, modulation and transmission power are selected as parameters. Input data are transformed to base band signals using these selected parameters, and input to the multi-band RF unit 104. The multi-band RF unit 104 transforms the input base band signals to plural frequency band RF signals, and the transformed signals are transmitted and received.

The control device 105 is explained below.

The frequency/transmission power allocation unit 106 allocates one or more frequency bands and transmission power levels to each user. It is possible to allocate different frequency bands to uplink and downlink, or allocate different frequency bands to control signals and data signals.

The RF environment recognition unit 107 recognizes the current status of frequencies that can be utilized by each user. For example, at least one item is detected among a usable frequency band and its bandwidth, other system's parameter, own system's interference power to others and interference from other systems, transmission loss and shadowing, etc.

The user required QoS determination unit 108 determines at least one necessary item per application, among an average transmission speed, a delay (average delay, maximum delay jitter, etc.), a frame error rate, a transmission power level, the maximum transmission speed and the minimum guaranteed transmission speed. These QoS information items are input from the application execution device 101.

In this embodiment, QoS includes an average transmission speed, a delay (average delay, maximum delay jitter, etc.), a frame error rate, a transmission power level, the maximum transmission speed and the minimum guaranteed transmission speed.

The instantaneous RF variation measurement unit 109 measures instantaneous variations of the desired signal and interference signals due to fading in frequency and time, in the used channel.

The multi-user scheduling control unit 110 performs scheduling for multi-users. The scheduling is performed in both dimensions of frequency and time.

The transmission parameter determination unit 111 determines parameters, which are used in the base band processor 103 for transforming user data to transmission series. More specifically, parameters relating to coding rate, interleaving, modulation method, transmission power control method, etc., are determined.

The RF usage DB (data base) 112 stores categories of frequencies; more specifically, frequency bands (dedicated frequency bands) allocated to each mobile communication service operator, frequency bands (registered frequency bands) that can be utilized by plural registered operators, and frequency bands (unlicensed frequency bands) that can be utilized by anyone satisfying legal conditions. For example, information on frequency category indicating ISM (Industry Science Medical) bands is stored in the RF usage DB 112. As for the registered frequency bands and unlicensed frequency bands, the requirements in using the frequency bands such as transmission power limitations are also stored in the RF usage DB 112.

The user DB (data base) 113 stores categories of users, for example information on usage priority, for example, plans for use for each frequency band, transmission capacity, transmission power limitations, signal processing capacity, utilizable RF of mobile stations, etc.

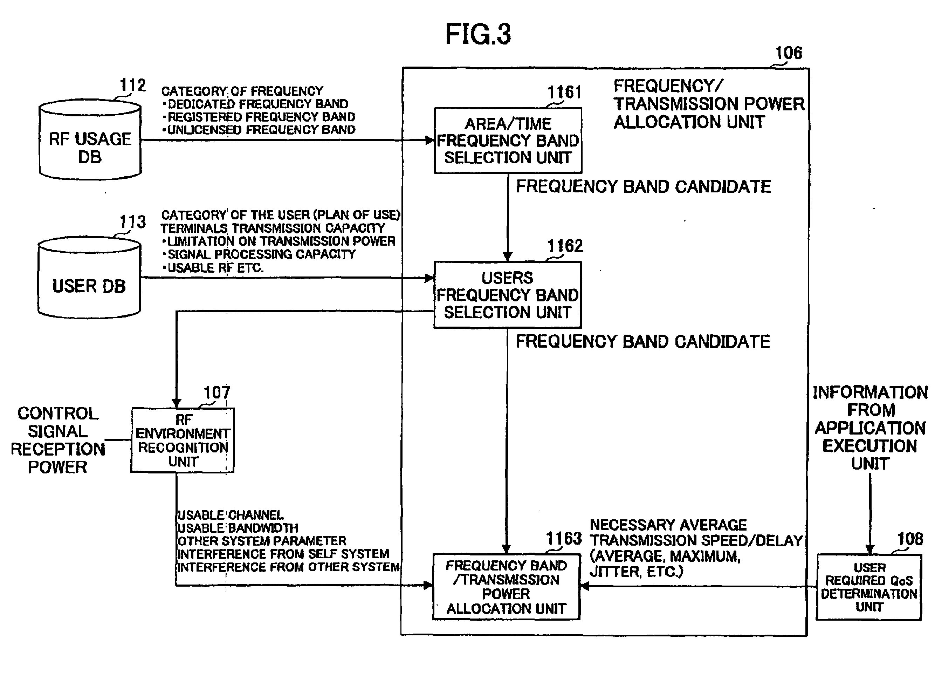

The frequency/transmission power allocation unit 106 is explained below with reference to Fig. 3.

The frequency/transmission power allocation unit 106 comprises an area/time/frequency band selection unit 1161 coupled to the RF usage DB 112, a user's frequency band selection unit 1162 coupled to the area/time/frequency band selection unit 1161, the RF environment recognition unit 107, and the user DB 113. The frequency/transmission power allocation unit 106 further comprises a frequency band/transmission power allocation unit 1163 coupled to the user's frequency band selection unit 1162, the RF environment recognition unit 107 and the user required QoS determination unit 108. The area/time/frequency band selection unit 1161 and the user's frequency band selection unit 1162 constitute a frequency band selection unit.

Last, the area/time/frequency band selection unit 1161 reads category information of frequency bands from the RF usage DB 112, and out of the read category information of frequency bands, selects frequency bands that can be utilized by the service operators in the area and time.

Frequency bands are classified into three categories, that is, dedicated frequency bands, registered frequency bands and unlicensed frequency bands. From the RF usage DB 112 storing the category information of frequency bands, user utilizable frequency bands are selected.

For example, the registered frequency bands can be utilized for a variety of services by plural service operators. Therefore, the registered frequency bands can be efficiently used by avoiding interference in area and time to improve the frequency utilization factor.

For example, frequency bands used for broadcasting are used in some areas but not used in other areas, and not used late at night while the broadcasting is not on-air. Therefore such frequency bands used for broadcasting have much different utilization factors from area to area, and from time to time. Then communication service operators can utilize such broadcasting frequency bands while avoiding interference to the broadcasting to make effective use of the frequency resources.

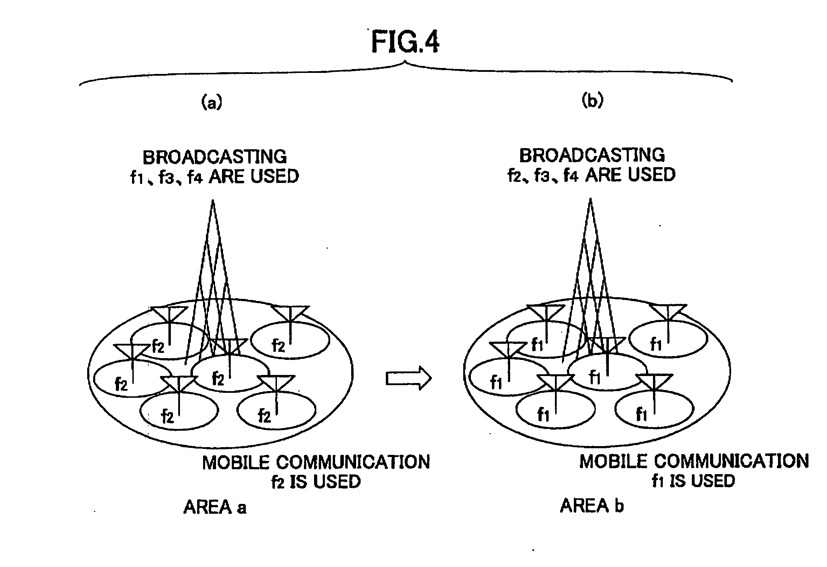

As shown in Fig. 4(a), in an area a where frequency bands f1, f3 and f4 are utilized for broadcasting, a frequency band f2 can be utilized for mobile communication. On the other hand, in an area b shown in Fig. 4 (b), since frequency bands f2, f3 and f4 are utilized for broadcasting, a frequency band f1 can be utilized for mobile communication. In this manner, frequency bands can be adaptively selected and utilized to make efficient use of the frequency resources.

Frequency bands which are normally not utilized but reserved for very important systems such as disaster control radio communications can also be utilized by having a mechanism for avoiding the existing important systems.

The area/time/frequency band selection unit 1161 inputs information on the selected frequency bands to the user's frequency band selection unit 1162.

The user's frequency band selection unit 1162 reads user information such as user category information and transmission capacity information, and based on the read user information, selects frequency bands utilizable by the user among the input frequency bands.

In ubiquitous communications, there are a variety of mobile terminals for users, and performance levels and capacities of the mobile terminals are not identical. For example, a mobile terminal with high processing capability can perform signal processing over wide radio areas, have strong transmission power and high performance radio circuits and can utilize different radio frequencies at the same time.

On the other hand, a small mobile station with low processing capability such as a sensor, has a low signal processing capability, and therefore cannot accommodate broadband signals. Such a mobile station has a small transmission power level and a limited scale of radio circuit, and therefore utilizable RF is limited. Based on this kind of information, utilizable frequency band selection is further limited.

In the registered frequency bands and the unlicensed frequency bands, their communication environments may be degraded due to unavoidable interference. Therefore, the user's frequency band selection unit 1162 allocates these frequency bands to best effort applications or low priority users such as users having cheap plans of use. The "best effort" means allocating to mobile stations the maximum transmission speed which can be made available at present. The user's frequency band selection unit 1162 allocates dedicated frequency bands to real time application users such as voice, video or high priority users such as users having an expensive plan of use.

The user's frequency band selection unit 1162 inputs selected frequency band information to the frequency band/transmission power allocation unit 1163 and inputs them also to the RF environment recognition unit 107.

The RF environment recognition unit 107 detects control signals or reception power in the input frequency band information, and detects the current status of each frequency band. More specifically, the RF environment recognition unit 107 collects information on utilizable channels, utilizable bandwidth, other system's parameters, own system's and other system's interference levels and required transmission power level. The RF environment recognition unit 107 inputs the collected RF environment condition to the frequency band/transmission power allocation unit 1163.

On the other hand, the application execution device 101 inputs QoS information per application to the user required QoS determination unit 108. The user required QoS determination unit 108, based on the input QoS, determines at least one necessary item per application, among an average transmission speed, a delay (average delay, maximum delay jitter, etc.), a frame error rate, a transmission power level, the maximum transmission speed, and the minimum guaranteed transmission speed. The user required QoS determination unit 108 inputs the determined item to the frequency band/transmission power allocation unit 1163.

Real time communications have a small tolerance against delay, which may be accepted by some applications. For example, in a voice communication system, when an error is detected, muting is carried out to prevent the user from noticing the quality degradation, and therefore certain level of frame error can be accepted.

On the other hand, in data transmission, frame error rate is desired to be the same level as wired communication. However, delay is acceptable to some extent, and therefore retransmission control can make the frame error rate become close to zero.

The frequency band/transmission power allocation unit 1163, based on the status of utilizable frequency bands sent from the RF environment recognition unit 107 and the QoS determination information sent from the user required QoS determination unit 108, selects the optimum frequency bands and bandwidths for each user, and calculates required average transmission power.

For example, the frequency band/transmission power allocation unit 1163, based on the interference power sent from the RF environment recognition unit 107, estimates the distance to the mobile terminal, and based on the estimated distance, selects the optimum frequency bands and bandwidths for each user and calculates required average transmission power.

Based on the QoS information input from the user required QoS determination unit 108 that is QoS required by the user, the frequency band/transmission power allocation unit 1163 allocates low frequencies to distant users or users wanting a wide service area, and allocates high frequencies to users wanting high speed transmission or broadband transmission.

As for dedicated frequency bands that can be controlled by owning service operators, their transmission power is calculated based on service operator's acceptable interference power. As for registered frequency bands that can only be used by registered service operators, their transmission power is calculated in accordance with interference avoidance rules defined among the service operators. As for unlicensed frequency bands that can be utilized by anyone, legally stipulated transmission power is utilized.

Here, where there is no continuous frequency band to satisfy user's required bandwidth, it is possible to select and allocate plural utilizable frequency bands to one user.

The frequency band/transmission power allocation unit 1163 selects a frequency band(s) while satisfying user required QoS (transmission speed, delay, error rate) and the maximum allowable transmission power by the terminal, and maximizes the frequency utilization factor over the whole system and further maximizes the service coverage area with the acceptable transmission power.

Since the RF environment varies continuously, the selected frequency band can be altered depending on the change of the environment. Therefore, it is possible to periodically select frequency bands or select frequency bands per call or packet.

The frequency band/transmission power allocation unit 1163 can select different frequency bands for uplink and downlink. In some applications such as data transmission, downlink traffic from a server may be multiple times larger than uplink traffic to the server. In this case, such asymmetric traffic can be efficiently accommodated by selecting asymmetric frequency bandwidths.

Some mobile stations have small available transmission power. In this case, by allocating a low frequency band having small transmission loss to its uplink, it is possible to keep low power consumption of the mobile terminal while maintaining an available wide service area.

The frequency band/transmission power allocation unit 1163 can select and allocate different frequency bands to data signals and control signals. For example, for control signals having low transmission rates but requiring low transmission delay, the frequency band/transmission power allocation unit 1163 selects a lower frequency band giving a desired signal-to-noise ratio to lower an error rate. On the other hand, for data signals accepting delay to some extent but requiring high speed transmission, the frequency band/transmission power allocation unit 1163 selects a high frequency band and broad bandwidth and utilizes retransmission control to accomplish high transmission speed while accepting delay occurrence.

The information such as thus selected frequency bands, bandwidths and transmission power level is input to the transmission parameter determination unit 111. For example, as for data signals and control signals, the information such as the selected frequency bands, bandwidths and transmission power is input to the transmission parameter determination unit 111.

The transmission parameter determination unit 111, based on the input information such as the used frequency band, bandwidth and transmission power, determines parameters used in the base band signal processor 103 converting the transmission data to transmission series, and inputs the determined parameters to the base band signal processor 103.

The base band signal processor 103 uses the input parameter and performs error correction coding, interleaving, modulation, transmission power control, multi-user scheduling per user, and inputs plural frequency band signals to the multi-band RF unit 104. For example, the multi-user scheduling is performed in dimensions of both frequency and time. When the scheduling is performed in the frequency dimension, the allocated frequency bands that are apart from each other can be controlled separately, and the allocated frequencies that are close to each other can be controlled together.

The multi-band RF unit 104 uses the allocated frequency bands to transmit data. For example, one RF unit having a software radio function can be utilized by changing parameters for each frequency or different subunits are prepared and used by switching for different frequency bands.

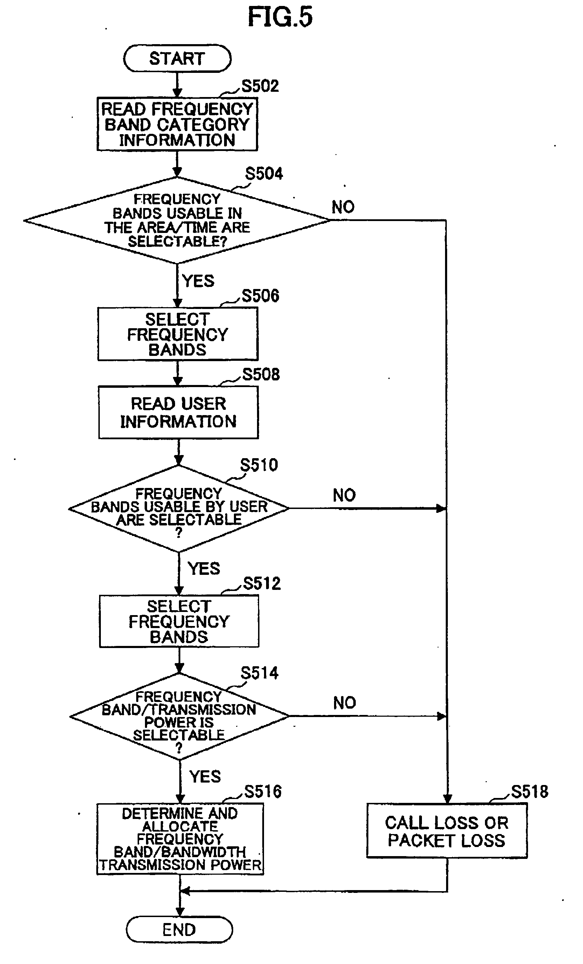

Next, the operation of the transmission system 100 according to this embodiment is explained with reference to Fig. 5.

At first, frequency category information is read from the RF usage data base 112 at step S502.

Based on the read frequency category information, it is determined whether the service operator can select frequency bands that are available the area and time at step S504. If available frequency bands can be selected (YES at step S504), frequency bands are selected at step S506. On the other hand, if available frequency bands cannot be selected (NO at step S504), the procedure goes to call blocking for voice communication or packet loss for data transmission at step S518.

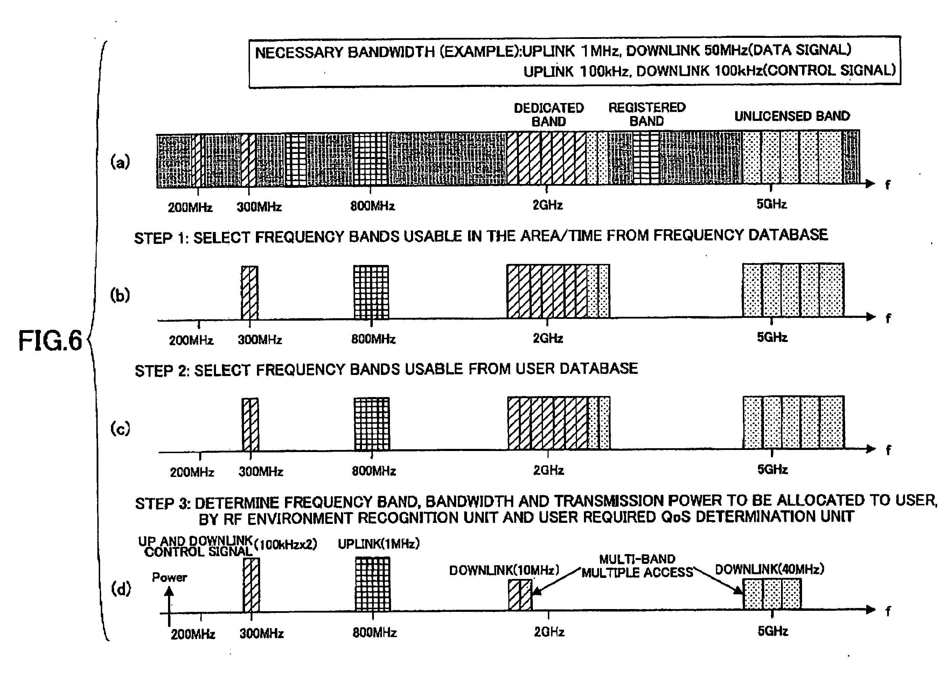

For example, the RF usage database 112 stores frequency category information such as dedicated frequency bands, registered frequency bands and unlicensed frequency bands shown in Fig. 6(a). After reading the frequency category information, the area/time/frequency band selection unit 1161 selects frequency bands that are available in the area and time. For example, 300 MHz band, 800 MHz band, 2 GHz band and 5 GHz band shown in Fig. 6(b) are selected as available frequency bands.

Next, user information is read from the user database 113 at step S508. Based on at least either one information item of the read user category information and transmission capacity information, it is determined at step S510 whether it is possible to select utilizable frequency bands out of the frequency bands selected at step S506.

If it is possible to select utilizable frequency bands (YES at step 510), utilizable frequency bands are selected at step S512. On the other hand, it is impossible to select utilizable frequency bands (NO at step S510), the procedure goes to call blocking for voice communication or packet loss for data transmission at step S518.

For example, the user's frequency band selection unit 1162 selects frequency bands the same as the input frequency band candidates as shown in Fig. 6(c).

Based on at least one item of utilizable channels, utilizable bandwidths and other system's parameters, interference from own system, interference from other system, and necessary transmission power levels input from the RF environment recognition unit 107, or based on at least one item of an average transmission speed, a delay (average, the maximum delay, jitter, etc.), a frame error rate transmission power level, the maximum transmission data rate, and the lowest guaranteed transmission data rate that are necessary per application and input from the user required QoS determination unit 108, it is determined whether the frequency band/transmission power allocation unit 1163 can select frequency bands/transmission power levels to be used per user at step 5514. If it is possible to select utilizable frequency bands/transmission power levels (YES at step S514), frequency bands, bandwidths and transmission power levels are determined and the frequency bands are allocated at step S516.

For example, as shown in Fig. 6(d), the 300 MHz band, 800 MHz band, 2 GHz band and 5 GHz band are allocated. If there is no continuous frequency band having a bandwidth satisfying user's request, it is possible to allocate plural utilizable frequency bandwidths to one user. Different frequencies can be allocated to data signals and controls signals. On the other hand, if it is impossible to select frequency band/transmission power level to be used (NO at step S514), the procedure goes to call blocking for voice communication or packet loss for data transmission at step S518.

According to this embodiment of the present invention, since service operators can utilize plural frequency bands other than already allocated frequencies, it is possible to flexibly deal with heavy traffic occurrence with uneven time distribution and uneven area distribution. It is also possible to allocate plural frequency bands to one system.

It is possible to satisfy user required QoS, maximize the frequency utilization factor over the whole system and keep low power consumption while maintaining a wide service area, and therefore realize mobile terminals that can be used in any area.

### [Industrial Applicability]

A frequency band allocation device and a frequency band allocation method according to the present invention can be utilized in mobile communications systems in which available frequency bands are utilized for plural communication systems.

## Claims

1. A frequency band allocation device comprising:
an RF database (112) arranged to store frequency category information indicating a dedicated frequency band, a registered frequency band or unlicensed frequency band;
a user information database (113) arranged to store user information;
a frequency band selecting unit (1161, 1162) arranged to select usable frequency bands based on the frequency category information and the user information; and
a frequency band allocation unit (1163) arranged to allocate a frequency band satisfying user required QoS out of the selected usable frequency bands;
**characterized in that** the frequency band allocation unit is arranged to allocate plural utilizable frequency bands to the user if any single frequency band satisfying a user required bandwidth is not available.

2. The frequency band allocation device as claimed in Claim 1, wherein
the frequency band selecting unit comprises:
a first frequency band selecting unit (1161) arranged to select first usable frequency bands based on the frequency category information; and
a second frequency band selecting unit (1162) arranged to select second usable frequency bands out of the first usable frequency bands based on the user information; and
the frequency band allocation unit is arranged to allocate a frequency band satisfying user required QoS out of the second usable frequency bands.

3. The frequency band allocation device as claimed in Claim 2, wherein
the frequency band selecting unit is arranged to select the first usable frequency bands based on at least one of area and time that a user uses a mobile terminal.

4. The frequency band allocation device as claimed in Claim 2, wherein
the user information database is arranged to store, as the user information, at least one of using priority information of each frequency band indicated by the frequency category information and transmission capability information of a mobile terminal used by the user;
and the second frequency band selecting unit is arranged to select the second usable frequency bands based on at least one of the priority information and the transmission capability information.

5. The frequency band allocation device as claimed in Claim 1, further comprising:
an RF environment recognition unit (107) for detecting the status of the usable frequency bands;
whereby
the frequency band allocation unit is arranged to allocate a frequency band to the user based on the status of the usable frequency bands.

6. The frequency band allocation device as claimed in Claim 1, further comprising:
a QoS determination unit (108) arranged to determine user required QoS in accordance with applications.

7. A frequency band allocation method comprising the steps of:
selecting usable frequency bands based on user information and frequency category information indicating a dedicated frequency band, a registered frequency band or unlicensed frequency band; and
allocating a frequency band satisfying user required QoS out of the selected usable frequency bands;
**characterised by** allocating plural utilizable frequency bands to the user if any single frequency band satisfying a user required bandwidth is not available.

## Patentansprüche

1. Frequenzband-Zuweisungsvorrichtung, umfassend:
eine HF-Datenbank (112), die angeordnet ist, um Frequenzkategorie-Informationen zu speichern, die ein dediziertes Frequenzband, ein registriertes Frequenzband oder nicht lizenziertes Frequenzband anzeigen;
eine Benutzerinformationen-Datenbank (113), die angeordnet ist, um Benutzerinformationen zu speichern;
eine Frequenzban-Auswableinheit (1161, 1162), die angeordnet ist, um verwendbare Frequenzbänder basierend auf den Frequenzkategorie-Informationen und den Benutzerinformationen auszuwählen; und
eine Frequenzband-Zuweisungseinheit (1163), die angeordnet ist, um ein Frequenzband aus den verwendbaren Frequenzbändern zuzuweisen, das vom Benutzer geforderte Dienstgüte erfüllt;
**dadurch gekennzeichnet, dass** die Frequenzband-Zuweisungseinheit angeordnet ist, um dem Benutzer mehrere nutzbare Frequenzbänder zuzuweisen, wenn ein einzelnes Frequenzband, das eine vom Benutzer geforderte Bandbreite erfüllt, nicht verfügbar ist.

2. Frequenzband-Zuweissungsvorrichtung nach Anspruch 1; wobei die Frequenzband-Zuweisungseinheit umfasst:
eine erste Frequenzband-Auswahleinheit (1161), die angeordnet ist, um erste verwendbare Frequenzbänder basierend auf den Frequenzkategorie-Informationen auszuwählen; und
eine zweite Frequenzband-Auswahleinbeit (1162), die angeordnet ist, um zweite verwendbare Frequenzbänder aus den ersten verwendbaren Frequenzbändern basierend auf den Benutzerinformationen auszuwählen; und
die Frequenzband-Zuweisungseinheit angeordnet ist, um ein Frequenzband aus den zweiten verwendbaren Frequenzbändern zuzuweisen, das vom Benutzer geforderte Dienstgüte erfüllt.

3. Frequenzband-Zuweisungseinheit nach Anspruch 2, wobei
die Frequenzband-Auswahleinheit angeordnet ist, um die ersten verwendbaren Frequenzbänder basierend auf mindestens einem von Gebiet und Zeit, in dem und zu der ein Benutzer ein mobiles Endgerät verwendet, auszuwählen.

4. Frequenzband-Zuweisungsvorrichtung nach Anspruch 2, wobei
die Benutzerinformationen-Datenbank angeordnet ist, um mindestens eines von Verwendungsprioritätsinformationen jedes Frequenzbands, das von den Frequenzkategorie-Informationen angezeigt wird, und Übertragungsfahigkeit-Informationen eines mobilen Endgeräts, das von dem Benutzer verwendet wird, als die Benutzerinformationen zu speichern;
und die zweite Frequenzband-Auswahleinheit angeordnet ist, um die zweiten verwendbaren Frequenzbänder basierend auf mindestens einem der Prioritätsinformationen und der Übertragungsfähigkeit-Informationen auszuwählen.

5. Frequenzband-Zuweisungsvorrichtung nach Anspruch 1, weiter umfassend:
eine HF-Umgebungserkennungseinheit (107) zum Detektieren des Status der verwendbaren Frequenzbänder;
wobei
die Frequenzband-Zuweisungseinheit angeordnet ist, um dem Benutzer ein Frequenzband basierend auf dem Status der verwendbaren Frequenzbänder zuzuweisen.

6. Frequenzband-Zuweisungsvorrichtung nach Anspruch 1, weiter umfassend:
eine Dienstgüte-Bestimmungseinheit (108), die angeordnet ist, um vom Benutzer geforderte Dienstgüte in Übereinstimmung mit Anwendungen zu bestimmen.

7. Frequenzband-Zuweisungsverfahren, die folgenden Schritte umfassend:
Auswählen verwendbarer Frequenzbänder basierend auf Benutzerinformationen und Frequenzkategorie-Informationen, die ein dediziertes Frequenzband, ein registriertes Frequenzband oder nicht lizenziertes Frequenzband anzeigen; und
Zuweisen eines Frequenzbands aus den ausgewählten verwendbaren Frequenzbändern, das vom Benutzer geforderte Dienstgüte erfüllt;
**gekennzeichnet durch** Zuweisen mehrerer verwendbarer Frequenzbänder zu dem Benutzer, wenn ein einzelnes Frequenzband, das eine vom Benutzer geforderte Bandbreite erfüllt, nicht verfügbar ist.

## Revendications

1. Dispositif d'affectation de bande de fréquences, comprenant :
une base de données RF (112) agencée de manière à stocker des informations sur les catégories de fréquences indiquant une bande de fréquences dédiée, une bande de fréquences enregistrée ou une bande de fréquences sans licence ;
une base de données d'informations sur les utilisateurs (113) agencée de manière à stocker des informations sur les utilisateurs ;
une unité de sélection de bandes de fréquences (1161, 1162) agencée de manière à sélectionner des bandes de fréquences utilisables sur la base des informations sur les catégories de fréquences et des informations sur les utilisateurs ; et
une unité d'affectation de bande de fréquences (1163) agencée de manière à affecter une bande de fréquences satisfaisant à une qualité de service (QoS) requise par l'utilisateur parmi les bandes de fréquences utilisables sélectionnées ;
**caractérisé en ce que** l'unité d'affectation de bande de fréquences est agencée de manière à affecter une pluralité de bandes de fréquences utilisables à l'utilisateur lorsqu'aucune bande de fréquence unique satisfaisant à une bande passante requise par l'utilisateur n'est disponible.

2. Dispositif d'affectation de bande de fréquences selon la revendication 1, dans lequel
l'unité de sélection de bandes de fréquences comporte :
une première unité de sélection de bandes de fréquences (1161) agencée de manière à sélectionner des premières bandes de fréquences utilisables sur la base des informations sur les catégories de fréquences ; et
une seconde unité de sélection de bandes de fréquences (1162) agencée de manière à sélectionner des secondes bandes de fréquences utilisables parmi les premières bandes de fréquences utilisables sur la base des informations sur les utilisateurs ; et
l'unité d'affectation de bande de fréquences est agencée de manière à affecter une bande de fréquences satisfaisant à une qualité de service (QoS) requise par l'utilisateur parmi les secondes bandes de fréquences utilisables.

3. Dispositif d'affectation de bande de fréquences selon la revendication 2, dans lequel
l'unité de sélection de bandes de fréquences est agencée de manière à sélectionner les premières bandes de fréquences utilisables sur la base d'au moins une zone et un temps d'utilisation d'un terminal mobile par un utilisateur.

4. Dispositif d'affectation de bande de fréquences selon la revendication 2, dans lequel
la base de données d'informations sur les utilisateurs est agencée de manière à stocker, sous la forme des informations sur les utilisateurs, au moins l'une parmi des informations sur la priorité d'utilisation de chaque bande de fréquences indiquée par les informations sur les catégories de fréquences et des informations sur la capacité de transmission d'un terminal mobile utilisé par l'utilisateur ;
et la seconde unité de sélection de bandes de fréquences est agencée de manière à sélectionner les secondes bandes de fréquences utilisables sur la base d'au moins l'une parmi les informations sur la priorité et les informations sur la capacité de transmission.

5. Dispositif d'affectation de bande de fréquences selon la revendication 1, comprenant en outre :
une unité de reconnaissante d'environnement RF (107) pour détecter l'état des bandes de fréquences utilisables ;
moyennant quoi
l'unité d'affectation de bande de fréquences est agencée de manière à affecter une bande de fréquences à l'utilisateur sur la base de l'état des bandes de fréquences utilisables.

6. Dispositif d'affectation de bande de fréquences selon la revendication 1, comprenant en outre :
une unité de détermination de qualité de service (QoS) (108) agencée de manière à déterminer une qualité de service (QoS) requise par l'utilisateur selon les applications.

7. Procédé d'affectation de bande de fréquences, comprenant les étapes ci-dessous consistant à :
sélectionner des bandes de fréquences utilisables sur la base d'informations sur les utilisateurs et d'informations sur les catégories de fréquences indiquant une bande de fréquences dédiée, une bande de fréquences enregistrée ou une bande de fréquences sans licence ; et
affecter une bande de fréquences satisfaisant à une qualité de service (QoS) requise par l'utilisateur parmi les bandes de fréquences utilisables sélectionnées ;
**caractérisé par** l'étape consistant à affecter une pluralité de bandes de fréquences utilisables à l'utilisateur lorsqu'aucune bande de fréquence unique satisfaisant à une bande passante requise par l'utilisateur n'est disponible.
